# EUROPÄISCHE PATENTSCHRIFT

(11) **EP 1 158 209 B1**
(45) Veröffentlichungstag und Bekanntmachung des Hinweises auf die Patenterteilung: **11.10.2006**
(21) Anmeldenummer: 01112619.0
(22) Anmeldetag: 23.05.2001
(51) Int. Cl.: F16H 25/20

(54) **Lineareinheit**
Slide unit
Unité linéaire

(30) Priorität: 26.05.2000 DE 10026238
(43) Veröffentlichungstag der Anmeldung: 28.11.2001
(73) Patentinhaber: Bosch Rexroth Mechatronics GmbH, 97424 Schweinfurt (DE)
(72) Erfinder: Keller, Bernhard, 97535 Wasserlosen-Kaisten (DE)
(74) Vertreter: Herzog, Markus

(56) Entgegenhaltungen:
- EP-A- 0 950 465
- US-A- 3 132 719
- US-A- 4 811 618
- US-A- 5 290 617
- PATENT ABSTRACTS OF JAPAN vol. 1997, no. 10, 31. Oktober 1997 (1997-10-31) & JP 09 152095 A (NIPPON SEIKO KK), 10. Juni 1997 (1997-06-10)
- PATENT ABSTRACTS OF JAPAN vol. 1998, no. 06, 30. April 1998 (1998-04-30) & JP 10 030704 A (NIPPON SEIKO KK), 3. Februar 1998 (1998-02-03)
- PATENT ABSTRACTS OF JAPAN vol. 1999, no. 04, 30. April 1999 (1999-04-30) & JP 11 002243 A (NIPPON SEIKO KK), 6. Januar 1999 (1999-01-06)
- PATENT ABSTRACTS OF JAPAN vol. 1997, no. 10, 31. Oktober 1997 (1997-10-31) & JP 09 166193 A (YOSHIDA SHIGENOBU), 24. Juni 1997 (1997-06-24)

## Beschreibung

Die Erfindung betrifft eine Lineareinheit mit einem Läufer, der auf einer Stange längs deren Stangenachse hin- und herbewegbar angeordnet ist, sowie mit wenigstens einer die Stange zumindest teilweise umgreifenden Schmiervorrichtung, welche wenigstens ein mit der Stange in Schmierkontakt stehendes Schmierelement und wenigstens ein mit dem Läufer bewegungsfest verbundenes Schmiermittel-Reservoir umfasst.

Eine derartige Lineareinheit ist beispielsweise aus der EP 0 874 172 A1 bekannt. Bei dieser als Wälzkörpergewindetrieb ausgeführten Lineareinheit sind zwei Schmiervorrichtungen an den axialen Enden der Läuferbaugruppe und an diese in axialer Richtung anschließend angeordnet. Jede Schmiervorrichtung umfasst ein Schmierelement aus einem schmiermittelhaltigen Polymerschaumstoff, das mit der Gewindespindel in Schmiereingriff steht. Ferner weist jede der Schmiervorrichtungen ein in axialer Richtung an das Schmierelement angrenzendes Schmiermittel-Reservoir auf, welches mit dem Schmierelement über einen Durchgang verbunden ist, so dass dem Schmierelement bei übermäßigem Verbrauch von Schmiermittel erneut Schmiermittel aus dem Schmiermittel-Reservoir zugeführt werden kann.

Nachteilig ist an der bekannten Lineareinheit vor allem die geringe schmieraktive Länge ihrer Schmierelemente, die sich einerseits einen in einer hohen Flächenpressung der Schmierelemente und der damit einhergehenden starken Abnutzung des Polymerschaumstoff-Materials auswirkt. Andererseits lagert sich sämtlicher von der Oberfläche der Stange abgestreifter Schmutz in den Poren des Polymerschaumstoff-Materials ab und verstopft diese. Dies kann zum einen den Austritt von Schmiermittel behindern und zum anderen zu einer Verhärtung des Polymerschaumstoff-Materials führen, was beides einen ausreichenden Schmierkontakt der Schmierelemente mit der Oberfläche der Stange beeinträchtigt.

Die EP 0 950 465 offenbart eine Lineareinheit gemäß dem Oberbegriff von Anspruch 1 mit einer die Stange zumindest teilweise umgreifenden Schmiervorrichtung mit einem Schmierelement und einem mit dem Läufer bewegungsfest verbundenen Schmiermittel-Reservoir. Das Schmierelement steht hierbei über seine gesamte sich in Achsrichtung der Stange erstreckenden Länge in direktem Kontakt mit dem Schmiermittel-Reservoir, da das Schmierelement ein vorstehender Abschnitt eines im Schmiermittel-Reservoir angeordneten schwammartigen Körpers ist. Dieser Aufbau weist den Nachteil auf, dass das Schmierelement nicht gleichzeitig eine Abstreiferfunktion übernehmen kann.

Die US 5,290,617 offenbart eine Lineareinheit mit einer glatten Stange ohne Schraubennut, bei der ein Feststoff-Schmierelement und eine zusätzliche Schmierung durch ein Schmiermittel vorgesehen sind. Die Dokumente JP 09-152095 und JP 10-030704 offenbaren Lineareinheiten, bei denen Schmierelemente vorgesehen sind, die allerdings nicht durch einen Grundkörper von ihrem Schmiermittel-Reservoir getrennt sind. Bei Dokumenten US 3,132,719, JP 11-002243 und JP 09-166193 wird Schmiermittel direkt von einem Schmiermittel-Reservoir zur Oberfläche einer Stange oder Schiene einer Linearführungsvorrichtung zugeführt, ohne dass ein Schmierelement vorgesehen ist. Die US 4,811,618 offenbart eine Gewindeführung ohne Schmiervorrichtung, bei der anstelle der ansonsten üblichen Wälzkörper zwischen Stange und Läufer eine Schnur mit einer reibungsarmen Oberfläche verwendet wird.

Ferner sind aus der DE 198 33 228 A1 und der US 5,749,266 Lineareinheiten bekannt, deren Schmiervorrichtungen aus einem schmiermittelhaltigen Polymerschaumstoff gefertigte Schmierelemente umfassen. Ferner offenbart die DE 197 54 454 A1 eine Lineareinheit, deren Schmiervorrichtung ein externes Schmiermittel-Reservoir aufweist. Der Vollständigkeit halber sei zum Stand der Technik außerdem noch auf die DE 299 19 250 U1 verwiesen.

Demgegenüber ist es Aufgabe der Erfindung, eine Lineareinheit der eingangs genannten Art anzugeben, welche unter Beibehaltung eines kompakten Aufbaus der gesamten Lineareinheit dennoch den Einsatz von Schmierelementen mit größerer schmieraktiver Länge ermöglicht, und wobei das Schmierelement gleichzeitig eine Abstreiferfunktion übernehmen kann.

Diese Aufgabe wird erfindungsgemäß durch eine Lineareinheit mit den Merkmalen des Anspruchs 1 gelöst. Im Vergleich mit der aus der gattungsbildenden EP 0 950 465 A2 bekannten Schmiervorrichtung kann somit das Schmierelement bei gleicher axialer Länge der Schmiervorrichtung und gleichem Vorratsvolumen des Schmiermittel-Reservoirs eine erheblich größere Erstreckung in Richtung der Stangenachse aufweisen, so dass deren vorstehend angeführte Nachteile erfindungsgemäß in einfacher Weise vermieden werden können. Im günstigsten Fall kann somit die gesamte axiale Erstreckung der Schmiervorrichtung zum Schmieren der Stangenoberfläche genutzt werden. Vorteilhafterweise sollte das Schmierlement eine schmieraktive Länge von wenigstens 15 mm, vorzugsweise von wenigstens 25 mm, aufweisen.

Die radiale Ineinander-Anordnung von Schmierelement und Schmiermittel-Reservoir wird bei einer nur mit Schmierfunktion betrauten Schmiervorrichtung in einfacher Weise dadurch bereitgestellt, dass die Schmiervorrichtung einen Grundkörper umfasst, an dessen Innenumfangsfläche das wenigstens eine Schmierelement angeordnet ist, und dessen Außenumfangsfläche zumindest teilweise eine innere Begrenzungswand des Schmiermittel-Reservoirs bildet. An dieser Stelle sei nochmals darauf hingewiesen, dass die Schmiervorrichtung die Stange nicht vollständig zu umgreifen braucht. Sie kann ihre Funktion vielmehr auch dann erfüllen, wenn sie die Stange lediglich U- bzw. Hufeisen-artig umklammert. Im Hinblick auf die Abdichtung der Schmiervorrichtung nach außen ist es jedoch zur Vereinfachung des konstruktiven Aufbaus bevorzugt, wenn der Grundkörper hülsenförmig ausgebildet ist.

Zur Bereitstellung der äußeren Begrenzungswand des Schmiermittel-Reservoirs ist es gemäß einer Ausbildungsvariante möglich, einen vorzugsweise hülsenförmigen Abdeckkörper vorzusehen, dessen Innenumfangsfläche die Außenumfangsfläche des Grundkörpers zumindest auf einem Teil dessen Länge mit Abstand umgibt. Alternativ ist es jedoch auch möglich, dass die äußere Begrenzungswand des Schmiermittel-Reservoirs von der Innenumfangsfläche einer Ausnehmung des Läufers oder eines mit diesem verbundenen Teils gebildet ist. Im letztgenannten Fall kann das Aufnahmevolumen des Schmiermittel-Reservoirs durch abschnittsweise Erweiterung dieser Ausnehmung vergrößert werden.

Einfache und kostengünstige Fertigung ergibt sich, wenn der Grundkörper und ggf. der Abdeckkörper als Spritzgussteil, vorzugsweise aus Kunststoff, gefertigt sind.

Zur Ermöglichung der Nachführung von Schmiermittel aus dem Schmiermittel-Reservoir zu dem Schmierelement wird vorgeschlagen, dass in dem Grundkörper wenigstens eine radiale Verbindungsöffnung vorgesehen ist, durch welche das in dem Schmiermittel-Reservoir aufgenommene Schmiermittel zu dem wenigstens einen Schmierelement gelangt. Wie weiter unten noch detailliert dargelegt werden wird, kann der Durchsatz von Schmiermittel durch die Größe und die Gestalt der Verbindungsöffnung oder/und in dieser Verbindungsöffnung zugeordnete Elemente beeinflusst werden.

In der Innenumfangsfläche des Grundkörpers ist wenigstens eine Schraubennut ausgebildet, in welcher ein entsprechend schraubenförmiges Schmierelement aufgenommen ist. Handelt es sich bei der Lineareinheit um einen Wälzkörpergewindetrieb, und weist die Gewindespindel dieses Wälzkörpergewindetriebs eine Mehrzahl von Spindelnuten auf, d.h. handelt es sich bei der Gewindespindel um eine mehrgängige Gewindespindel, so ist es selbstverständlich vorteilhaft, wenn auch die Schmiervorrichtung zumindest eine der Ganganzahl entsprechende Anzahl von schraubenförmigen Schmierelementen aufweist, von denen jedes zur Schmierung einer der Spindelnuten dient. Ist es beabsichtigt, nicht nur die Spindelnuten der Gewindespindel zu schmieren, sondern auch die restliche Außenumfangsfläche der Gewindespindel, so können hierzu weitere Schmierelemente an der Innenumfangsfläche des Grundkörpers vorgesehen werden. Vorteilhafterweise steht jede der Schraubennuten über eine eigene Verbindungsöffnung mit dem Schmiermittel-Reservoir in Schmiermittel-Austauschkontakt.

Grundsätzlich ist es von Vorteil, wenn sich das Schmierelement im Wesentlichen über die gesamte Länge der Nut erstreckt. Steht jedoch ausreichender axialer Bauraum zur Verfügung, so kann in Richtung der Erstreckung der Nut gesehen vor oder/und hinter dem Schmierelement ein Abstreifelement in der Nut angeordnet sein, dessen Aufgabe hauptsächlich darin besteht, in den Schmierbereich eintretende Schmutzpartikel von der Oberfläche der Stange abzustreifen und vom eigentlichen Schmierelement fernzuhalten. Daneben dient das Abstreifelement aber auch dazu, überschüssiges Schmiermittel von der Stangenoberfläche abzustreifen und so zu einer gleichmäßigen Schmierung der Lineareinheit beizutragen.

Die Ausbildung des Grundkörpers mit einer Schraubennut hat den Vorteil, dass das schraubenförmige Schmierelement mit der Spindelnut über eine größere Weglänge in Schmierkontakt steht, was zum einen die Schmiereffizienz erhöht und zum anderen die Beanspruchung des Schmierelements verringert.

Um den Übertritt von Schmiermittel aus dem Schmiermittel-Reservoir zu dem Schmierelement erleichtern zu können, wird vorgeschlagen, dass in der Außenumfangsfläche des Grundkörpers wenigstens eine vorzugsweise in Umfangsrichtung verlaufende Nut ausgebildet ist, in welcher ein Schmiermittel-Ansaugelement aufgenommen ist.

Der Schmiermittelaustausch zwischen diesem Ansaugelement und dem Schmierelement kann in vielfältiger Weise gewährleistet werden. Beispielsweise kann das Schmiermittel-Ansaugelement wenigstens einen radial inneren Ansatz aufweisen, der in eine zugehörige Verbindungsöffnung eingreift und mit einem zugehörigen Schmierelement in Schmiermittelaustausch-Kontakt steht, d.h. insbesondere das zugehörige Schmierelement berührt. Es ist jedoch auch möglich, in die Verbindungsöffnung ein gesondert gefertigtes Dochtelement einzusetzen, das die Funktion dieses Ansatzes übernimmt.

Als Werkstoff für das wenigstens eine Schmierelement oder/und das wenigstens eine Schmiermittel-Ansaugelement oder/und das wenigstens eine Dochtelement hat sich Polymerschaumstoff, insbesondere offenzelliger Polymerschaumstoff bewährt. Vorzugsweise können das wenigstens eine Schmierelement oder/und das wenigstens eine Schmiermittel-Ansaugelement oder/und das wenigstens eine Dochtelement aus einem Polymerschaumstoff-Plattenmaterial geschnitten sein, beispielsweise mittels Wasserstrahlschneiden. Dies gilt auch für schraubenförmige Schmierelemente, welche beispielsweise in Form einer Spirale geschnitten werden, wobei der Wert des Radius der innersten Windung dieser Spirale wenigstens dem Wert des gewünschten Schraubenradius des schraubenförmigen Schmierelements entspricht. Die so erhaltene Spirale kann dann unter Ausnutzung der Flexibilität des Schaumkunststoff- bzw. Polymerschaumstoff-Materials zu einer Schraube gezogen bzw. verformt und in die Schraubennut in der Innenfläche des Grundkörpers der Schmiervorrichtung eingelegt werden.

Schließlich ist es auch noch denkbar, dass das wenigstens eine Dochtelement als Membrane ausgebildet ist, vorzugsweise als vom Schmiermittel-Reservoir zum Schmierelement hin öffnende Rückschlag-Membrane.

In Weiterbildung der Erfindung kann an wenigstens einem der, vorzugsweise beiden, axialen Längsenden der Schmiervorrichtung eine Dichtvorrichtung vorgesehen sein, welche den unerwünschten Austritt von Schmiermittel aus der Schmiervorrichtung verhindert. Bevorzugt ist diese Dichtvorrichtung baugleich zu den Dichtungen, welche an den axialen Längsenden der Gewindemuttereinheit vorgesehen sind.

Die vorstehend erläuterte Lineareinheit verfügt aufgrund der Ausbildung der Schmiervorrichtung mit einem Schmiermittel-Reservoir über lange Zeit, wenn nicht gar seine gesamte Lebensdauer, über eine ausreichende Schmierung. Um auch bei hoher Beanspruchung und somit hohem Schmiermittelverbrauch über die gesamte Lebensdauer der Lineareinheit eine ausreichende Schmierung sicherstellen zu können, kann jedoch vorgesehen sein, dass das Schmiermittel-Reservoir einen Anschluss zum Befüllen mit Schmiermittel aufweist. Das Schmiermittel kann dabei Schmierfett oder vorzugsweise Schmieröl sein.

Nachzutragen ist noch, dass der Läufer, wie dies an sich bekannt ist, oder eine an diesem befestigte Aufbaueinheit zur Anbringung einer durch die Lineareinheit zu verstellenden Funktionseinheit dienen kann. Als vorteilhaft hat es sich dabei ferner erwiesen, wenn die Schmiervorrichtung im Wesentlichen innerhalb der axialen Erstreckung des Läufers oder/und der Aufbaueinheit angeordnet ist.

Insbesondere dann, wenn die Lineareinheit als Wälzkörperschraubtrieb ausgebildet ist, braucht die auf die Aufbaueinheit ausgeübte Last nicht oder zumindest nur zu einem vernachlässigbaren Teil über die Gewindemuttereinheit auf die Gewindespindel übertragen zu werden. Vielmehr kann diese Last an eine Profilschiene übertragen werden, die sich an einem Führungsgehäuse lastübertragend abstützt. Da die Gewindemuttereinheit somit nur die Aufgabe zu erfüllen hat, eine Drehbewegung der Gewindespindel in eine Linearbewegung des Läufers umzusetzen, kann sie in axialer Richtung relativ kurz ausgebildet sein, insbesondere deutlich kürzer als die Aufbaueinheit, deren Länge ausschließlich durch die Forderung nach Schaffung einer großen Vielfalt von Anbringungsmöglichkeiten für durch die Lineareinheit verstellbare Funktionseinheiten bestimmt ist. Daher kann in dem Läufer oder/und der Aufbaueinheit ohne weiteres Bauraum zur Aufnahme der Schmiervorrichtungen geschaffen werden bzw. kann bereits zur Verfügung stehender, bislang nicht genutzter Bauraum zur Unterbringung von Schmiervorrichtungen verwendet werden. Es ist leicht einzusehen, dass der Läufer bzw. die Aufbaueinheit hierdurch in axialer Richtung eine geringere Gesamtlänge aufweist, und dass diese geringere Gesamtlänge ohne weitere Änderungen des Wälzkörpergewindetriebs unmittelbar zur Vergrößerung des Verschiebewegs des Wälzkörpergewindetriebs genutzt werden kann.

Festzuhalten ist, dass die Schmiervorrichtung nicht auf ihrer gesamten axialen Erstreckung innerhalb der axialen Erstreckung des Läufers oder/und der Aufbaueinheit aufgenommen zu sein braucht. Vielmehr lässt sich unter Einsatz des Grundgedankens der vorliegenden Erfindung bereits dann eine erhebliche Längenreduzierung des Läufers erzielen, wenn die Schmiervorrichtung zu wenigstens 70%, vorzugsweise zu wenigstens 90%, ihrer axialen Erstreckung innerhalb der axialen Erstreckung des Läufers oder/und der Aufbaueinheit angeordnet ist.

Der Gedanke, die Schmiervorrichtung im Wesentlichen innerhalb der axialen Erstreckung des Läufers oder/und der Aufbaueinheit anzuordnen, ist auch unabhängig von der radial aufeinanderfolgenden Anordnung von Schmierelement und Schmiermittel-Reservoir einsetzbar. Daher wird für diesen Gedanken unabhängiger Schutz angestrebt.

Mit Vorteil kann die vorstehend erläuterte Erfindung beispielsweise bei einem Wälzkörpergewindetrieb, insbesondere einem Kugelgewindetrieb, eingesetzt werden, welcher eine die Stange bildende Gewindespindel mit einer Spindelachse umfasst, wobei in der Außenumfangsfläche der Gewindespindel wenigstens eine Spindelnut vorgesehen ist, sowie eine zumindest einen Teil des Läufers bildende, die Gewindespindel umgreifende Gewindemuttereinheit umfasst mit wenigstens einer Gegenspindelnut, welche zusammen mitder zugehörigen Spindelnut der Gewindespindel einen Gewindekanal bildet, wobei der Gewindekanal Teil eines in sich geschlossenen Umlaufkanals ist, in welchem eine endlose Reihe von Wälzkörpern aufgenommen ist.

Zur Sicherstellung einer den gewünschten Gewindeeingriff von Spindelnut(en) und Schmierelement(en) gewährleistenden Relativstellung von Schmiervorrichtung und Gewindespindel wird vorgeschlagen, dass in den Grundkörper wenigstens ein Ausrichtstift eingesetzt, vorzugsweise eingeschraubt, ist, der in eine Spindelnut der Gewindespindel eingreift. Grundsätzlich ist der Eingriff dieses Ausrichtstifts mit der Spindelnut nur während der Montage des Wälzkörpergewindetriebs erforderlich, da anschließend im Betrieb die korrekte Ausrichtung durch die Befestigung der einzelnen Baugruppen aneinander beibehalten bleibt. Um den Betrieb des Wälzkörperschraubtriebs nicht unnötigerweise zu behindern, kann der Ausrichtstift daher nach erfolgter Montage wieder entfernt oder zumindest doch etwas zurückgezogen werden. Es ist jedoch auch möglich, zumindest das in die Spindelnut eingreifende Kopfteil des Ausrichtstifts aus einem im Betrieb schnell verschleißenden Material, beispielsweise einem weichen Kunststoff, zu fertigen.

Die Erfindung wird im Folgenden an Ausführungsbeispielen anhand der beigefügten Zeichnungen näher erläutert werden. Es stellt dar:
- Fig. 1: eine grob schematische, nicht maßstabsgetreue Schnittansicht eines erfindungsgemäßen Wälzkörperschraubtriebs;
- Fig. 2: eine perspektivische, teilweise geschnittene Ansicht einer Ausführungsform einer erfindungsgemäßen Schmiervorrichtung;
- Fig. 3: einen Grundkörper der Schmiervorrichtung gemäß Fig. 2;
- Fig. 4: eine Abdeckhülse der Schmiervorrichtung gemäß Fig. 2;
- Fig. 5: ein Schmiermittel-Ansaugelement der Schmiervorrichtung gemäß Fig. 2;
- Fig. 6: ein Schmierelement der Schmiervorrichtung gemäß Fig. 2;
- Fig. 7: ein Dichtelement der Schmiervorrichtung gemäß Fig. 2;
- Fig. 8: eine Ansicht ähnlich Fig. 3 eines Grundkörpers einer nicht erfindungsgemäßen Schmiervorrichtung; und
- Fig. 9: ein Schmierelement der Schmiervorrichtung gemäß Fig. 8.

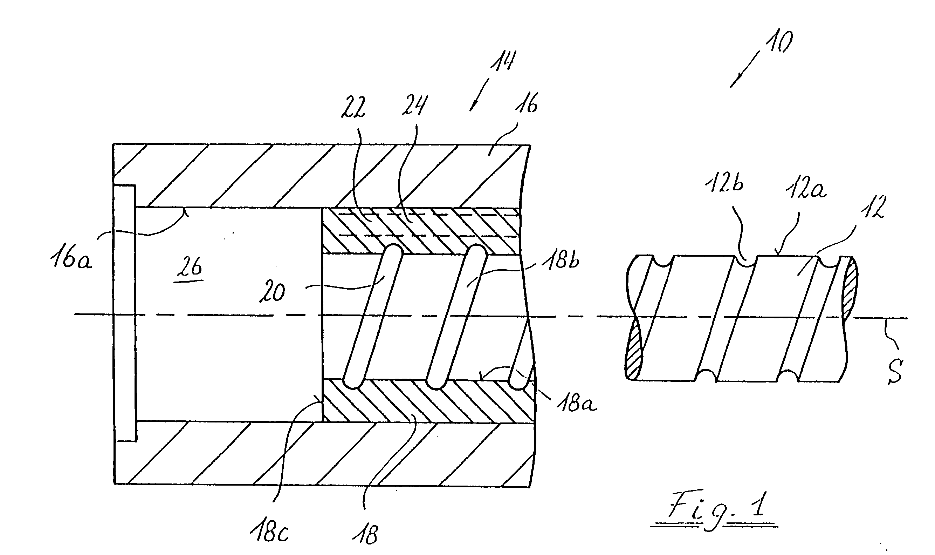

In Fig. 1 ist ein erfindungsgemäßer Wälzkörperschraubtrieb als Beispiel für eine erfindungsgemäße Lineareinheit allgemein mit 10 bezeichnet. Er umfasst eine Gewindespindel 12 mit einer Spindelachse S und einem auf der Gewindespindel 12 in Richtung der Spindelachse S hin- und herverfahrbaren Führungswagen 14, der zur Anbringung einer durch den Wälzkörpergewindetrieb 10 verstellbaren (nicht dargestellten) Funktionseinheit dient. Der Führungswagen 14 umfasst einen Führungswagen-Hauptteil 16 und eine von dem Führungswagen-Hauptteil 16 gesondert ausgebildete Gewindemuttereinheit 18, welche in einen Axialdurchgang 16a des Führungswagen-Hauptteils 16 relativ zu diesem unverdrehbar eingesetzt ist.

In der Außenumfangsfläche 12a der Gewindespindel 12 sind ein oder mehrere Spindelnuten 12b ausgebildet. Je nach der Anzahl der schraubenförmig ineinander verlaufenden Spindelnuten 12b handelt es sich bei der Gewindespindel 12 um eine ein- oder mehrgängige Gewindespindel. In der Innenumfangsfläche 18a der Gewindemuttereinheit 18 ist eine entsprechende Anzahl von Gegenspindelnuten 18b ausgebildet, welche zusammen mit den Spindelnuten 12b der Gewindespindel 12 einen Gewindekanal 20 bilden, der ebenso wie ein in Fig. 1 gestrichelt dargestellter Rückführkanal 22 Teil eines endlosen Umlaufkanals 24 ist, in dem eine Vielzahl von in Fig. 1 nicht dargestellten Wälzkörpern, vorzugsweise Kugeln, angeordnet ist.

In an sich bekannter Weise ist der Führungswagen 14 an einer (nicht dargestellten) Profilschiene geführt, die sich an einem Führungsgehäuse lastübertragend abstützt, so dass die Muttereinheit 18 keine bzw. annähernd keine Last auf die Gewindespindel 12 zu übertragen braucht und bezüglich der Spindelachse S unverdrehbar ist, welche in (ebenfalls nicht dargestellten) Endstücken des Führungsgehäuses um die Spindelachse S verdrehbar gelagert ist. Auf diese Weise kann eine Drehung der Gewindespindel 12 um die Spindelachse S in eine Linearbewegung des Führungswagens 14 in Richtung der Spindelachse S umgesetzt werden.

Wie man in Fig. 1 ferner erkennt, steht bei dem erfindungsgemäßen Wälzkörperschraubtrieb 10 im Bereich des linken Axialendes des Führungswagen-Hauptteils 16 an die Stirnfläche 18c der Gewindemuttereinheit 18 angrenzend noch Bauraum 26 zur Verfügung, der erfindungsgemäß zur Aufnahme einer Schmiervorrichtung 28 genutzt wird, deren Aufbau mit Bezug auf die nachfolgenden Figuren näher erläutert werden soll.

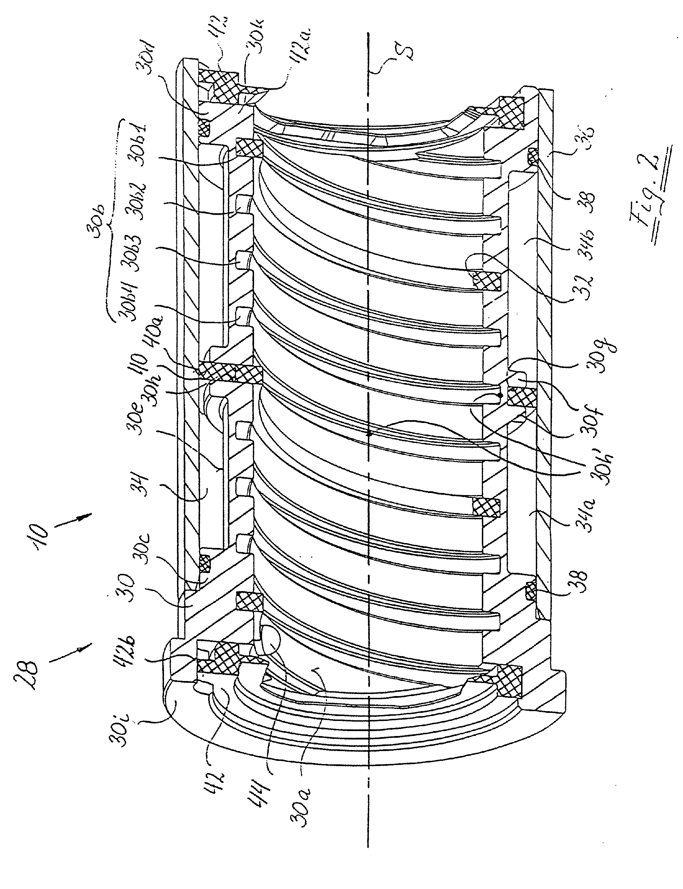

In den Figuren 2 bis 7 ist erste Ausführungsform einer erfindungsgemäßen Schmiervorrichtung 28 dargestellt:

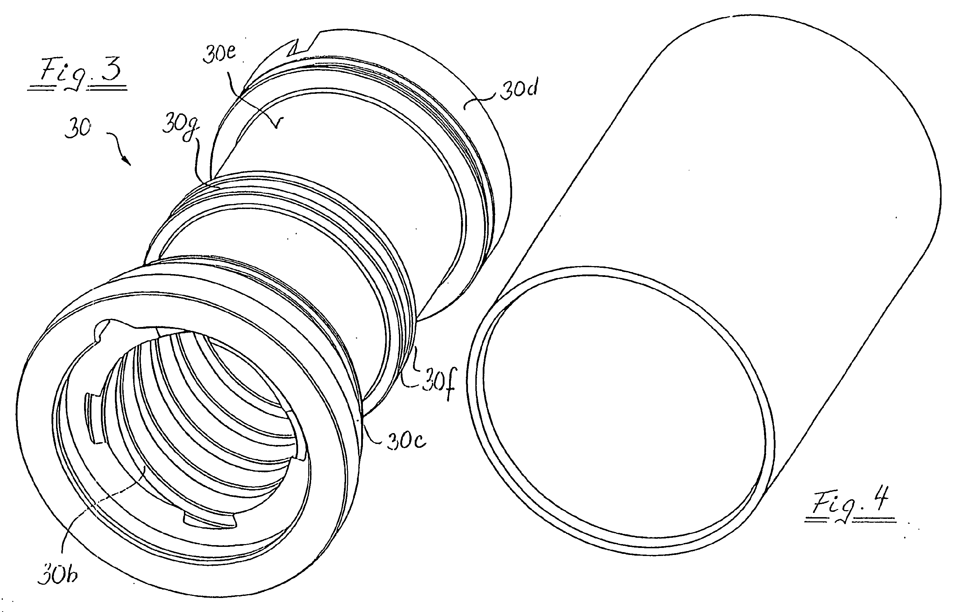

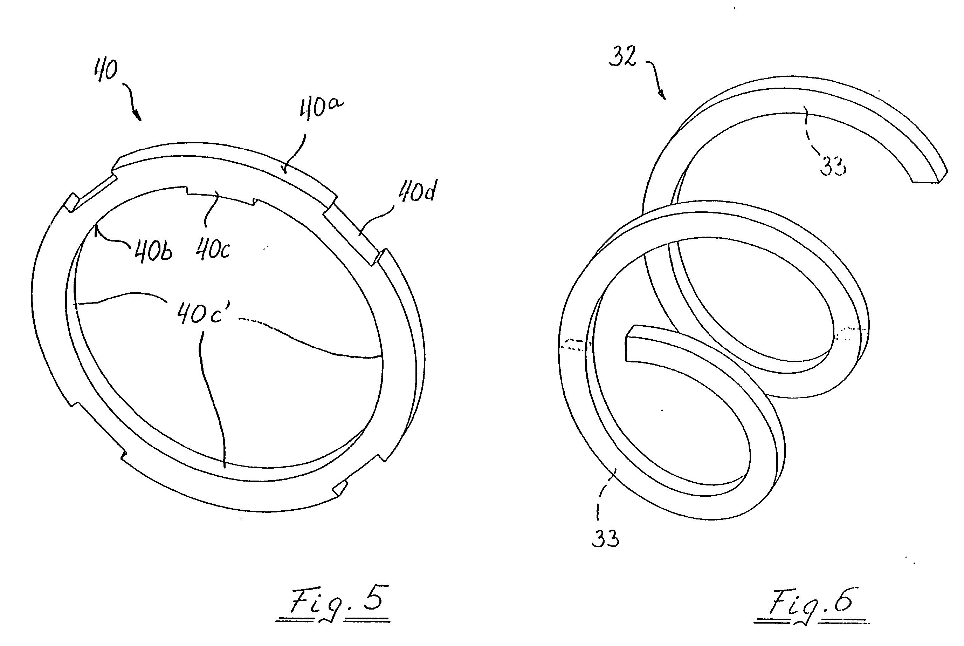

Die Schmiervorrichtung 28 umfasst einen Grundkörper 30 (siehe auch Fig. 3), an dessen Innenumfangsfläche 30a insgesamt vier ineinander verlaufende Schraubennuten 30b1, 30b2, 30b3 und 30b4 (zusammen nachfolgend als Schraubennuten 30b bezeichnet) vorgesehen sind. In den Schraubennuten 30b sind schraubenförmige Schmierelemente 32 (siehe auch Fig. 6) angeordnet, wobei in Fig. 2 der Übersichtlichkeit der Darstellung halber lediglich das in die Schraubennut 30b1 eingesetzte Schmierelement 32 dargestellt ist. Jedes der Schmierelemente 32 dient zum Eingriff in eine Gewindenut 12b der Gewindespindel 12. Die in Fig. 2 dargestellte Schmiervorrichtung 28 ist also zum Zusammenwirken mit einer viergängigen Gewindespindel 12 ausgebildet.

An der Außenseite des Grundkörpers 30 ist ein Schmiermittel-Reservoir 34 ausgebildet. Der Grundkörper 30 umfasst hierzu im Bereich seiner beiden Längsenden Ringansätze 30c und 30d, welche in radialer Richtung über die im Wesentlichen zylindrische Außenumfangsfläche 30e des Grundkörpers 30 hinausragen. Auf diese Ringansätze 30c und 30d ist eine Abdeckhülse 36 (siehe auch Fig. 4) aufgeschoben, so dass im Zusammenwirken mit Dichtungsringen 38 ein geschlossener Hohlraum für das Schmiermittel-Reservoir 34 entsteht. In den Figuren nicht dargestellt ist ein Anschluss für einen Schmiernippel zum Befüllen des Schmiermittel-Reservoirs 34 mit Schmiermittel, vorzugsweise Schmieröl.

Etwa im Bereich der Längsmitte des Grundkörpers 30 weist dieser zwei Ringrippen 30f auf, die sich in radialer Richtung zwar über die Außenumfangsfläche 30e des Grundkörpers 30 erstrecken, jedoch nicht so weit wie die Ringansätze 30c und 30d. In der von diesen beiden Ringrippen 30f begrenzten Ringnut 30g ist ein ringförmiges Schmiermittel-Ansaugelement 40 (siehe auch Fig. 5) aufgenommen, das mit seiner Außenumfangsfläche 40a an der Innenfläche der Abdeckhülse 36 anliegt. An der Innenumfangsfläche 40b des Schmiermittel-Ansaugelements 40 ist gemäß Fig. 5 ein Dochtansatz 40c vorgesehen, der eine radiale Durchbrechung 30h des Grundkörpers 30 durchgreift und die Außenumfangsfläche des schraubenförmigen Schmierelements 32 berührt. Auf diese Weise kann Schmiermittel vom Schmiermittel-Reservoir 34 zum Schmierelement 32 nachgeführt werden.

Ferner sind gemäß Fig. 5 in der Außenumfangsfläche 40a des Schmiermittel-Ansaugelements 40 Ausnehmungen 40d vorgesehen, welche einen Austausch von Schmiermittel zwischen den beiden Kammern 34a und 34b des Schmiermittel-Reservoirs 34 ermöglichen.

Festzuhalten ist, dass bei der vorstehend beschriebenen Ausführungsform der Schmiervorrichtung 28 lediglich eines der schraubenförmigen Schmierelemente 32 vom Schmiermittel-Reservoir 34 mit Schmiermittel versorgt wird, und zwar das in Fig. 2 dargestellte Schmierelement. Soll auch den anderen (nicht dargestellten) Schmierelementen aus dem Schmiermittel-Reservoir 34 unmittelbar Schmiermittel zugeführt werden, so müssten der Durchbrechung 30h analoge Durchbrechungen auch an anderen Stellen des Umfangs der Ringnut 30g vorgesehen sein, etwa an den in Fig. 2 mit 30h' bezeichneten Stellen, und müsste das Schmiermittel-Ansaugelement 40 (siehe Fig. 5) an den mit 40c' bezeichneten Stellen dem Dochtansatz 40c entsprechende Ansätze aufweisen.

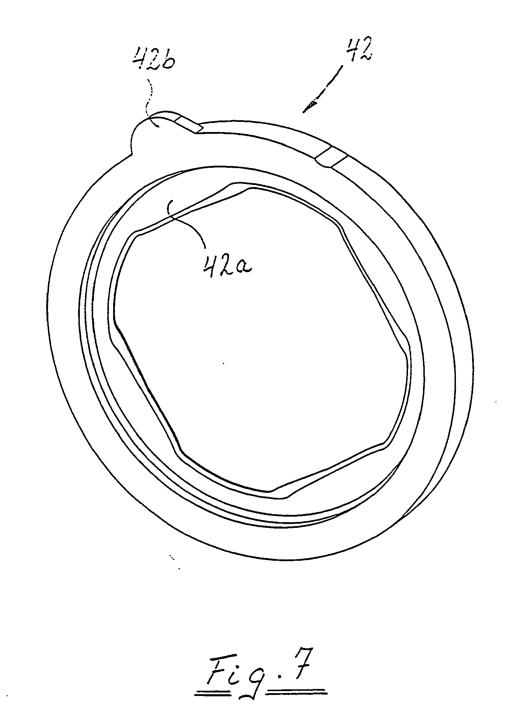

Um einen Austritt von Schmiermittel aus dem Bereich der Schmiervorrichtung 28 verhindern zu können, sind im Bereich der Längsenden der 30i und 30k des Grundkörpers 30 Dichtvorrichtungen 42 (siehe auch Fig. 7) mit inneren Dichtlippen 42a vorgesehen, die, wie man insbesondere in Fig. 7 erkennt, wiederum im Hinblick auf die Viergängigkeit der Gewindespindel 12 gestaltet sind. Eine äußere Nase 42b stellt die Beibehaltung der gewünschten Relativdrehstellung zwischen der Dichtvorrichtung 32 und der Gewindespindel 12 sicher.

Gemäß Fig. 2 ist im Bereich des Längsendes 30i des Grundkörpers 30 in diesem Grundkörper ferner ein Sicherungsstift 44 eingeschraubt, dessen radial inneres Ende zum Eingriff in eine Spindelnut 12b der Gewindespindel 12 bestimmt ist und so die gewünschte Relativstellung des Grundkörpers 30 und somit der gesamten Schmiervorrichtung 28 bezüglich der Gewindespindel 12 sicherstellt.

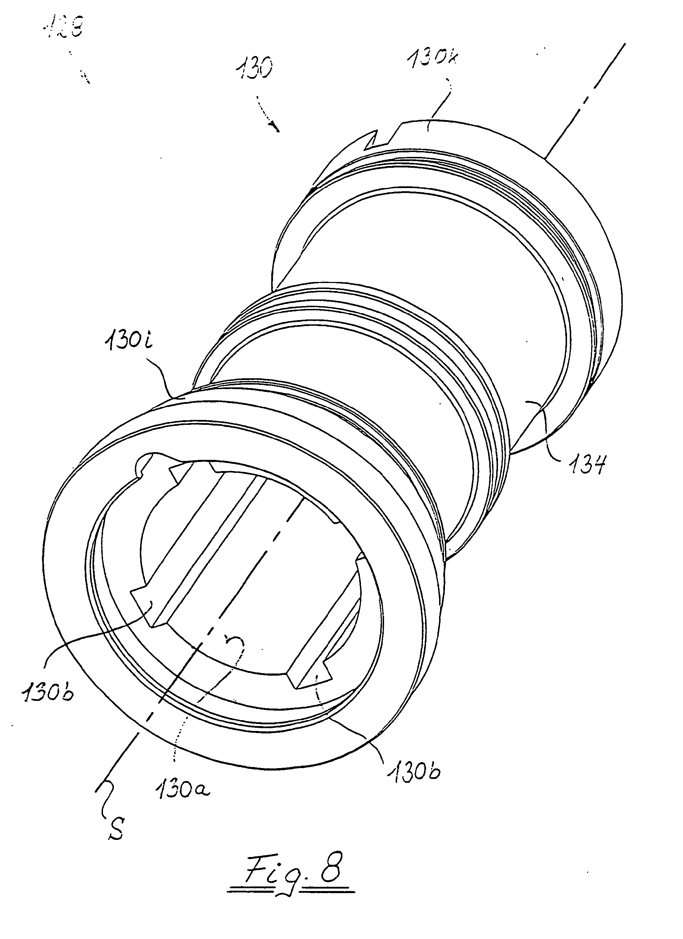

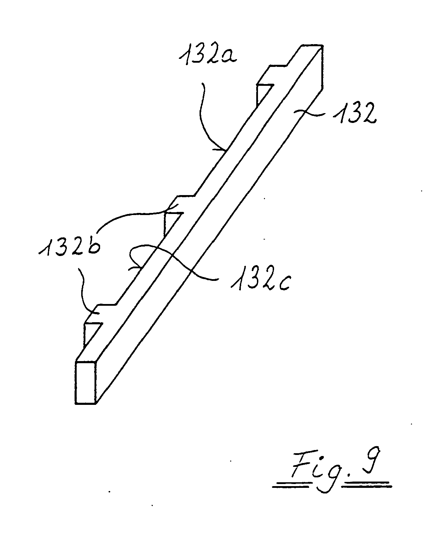

In den Figuren 8 und 9 sind Teile einer nicht erfindungsgemäßen Schmiervorrichtung dargestellt, die im Wesentlichen der Ausführungsform gemäß Fig. 2 entspricht. Analoge Teile sind daher in den Figuren 8 und 9 mit den gleichen Bezugszeichen versehen wie in den Figuren 2 bis 7, jedoch vermehrt um die Zahl 100. Des Weiteren wird die Schmiervorrichtung gemäß Fig. 8 und 9 im Folgenden nur insoweit beschrieben werden, als sie sich von der Ausführungsform gemäß Figuren 2 bis 7 unterscheidet, auf deren Beschreibung hiermit ansonsten ausdrücklich verwiesen sei.

Der Grundkörper 130 der Schmiervorrichtung 128 unterscheidet sich von dem Grundkörper 30 der Schmiervorrichtung 28 gemäß Fig. 2 hauptsächlich dadurch, dass die an der Innenumfangsfläche 130a vorgesehenen Nuten 130b zur Aufnahme von Schmierelementen 132 (siehe Fig. 9) im Wesentlichen in Längsrichtung der Spindelachse S verlaufen. Entsprechend sind die Schmierelemente 132, wie in Fig. 9 dargestellt, als Schmierleisten ausgebildet, wobei an einer Längsseite 132a dieser Schmierleisten 132 Schmieransätze 132b vorgesehen sind, welche zum Eingriff in die Spindelnuten 12b der Gewindespindel 12 bestimmt sind. Bei entsprechender Bemessung der Schmieransätze 132b können die zwischen den Schmieransätzen 132b vorgesehenen Flächenabschnitte 132c der Längsseite 132a der Schmierleiste 132 an der Außenumfangsfläche 12a der Gewindespindel 12 anliegen und auf diese Schmiermittel auftragen.

Ein weiterer Unterschied der Schmiervorrichtung 128 gemäß Figuren 8 und 9 gegenüber der Schmiervorrichtung 28 gemäß Figuren 2 bis 7 besteht darin, dass der Grundkörper 130, insbesondere dessen beide Längsenden 130i und 130k, derart bemessen sind, dass das Schmiermittel-Reservoir 134 nicht in Zusammenwirken mit einer der Abdeckhülse 36 entsprechenden Abdeckhülse, sondern in Zusammenwirken mit der inneren Umfangswand 16a des Führungswagen-Hauptteils 16 begrenzt ist. Hierdurch kann das Aufnahmevolumen des Schmiermittel-Reservoirs 134 verglichen mit dem Schmiermittel-Reservoir 34 der Ausführungsform gemäß Figuren 2 bis 7 vergrößert werden, und zwar um das von der Abdeckhülse eingenommene Volumen. Eine weitere Vergrößerung des Aufnahmevolumens des Schmiermittel-Reservoirs kann durch entsprechende Bearbeitung des Führungswagen-Hauptteils 16 erzielt werden.

Hinsichtlich des Übertritts von Schmiermittel aus dem Schmiermittel-Reservoir 134 zu den Schmierleisten 132 kann auf die vorstehenden Ausführungen zur Schmiervorrichtung 28 gemäß Figuren 2 bis 7 verwiesen werden.

Nachzutragen ist noch, dass das Schmierelement 32 sich nicht über die gesamte Erstreckung der Aufnahmenut 30b zu erstrecken braucht. Vielmehr können bei ausreichender Länge der Nut 30b in deren Längsrichtung vor oder/und hinter dem Schmierelement 32 Abstreifelemente 33 vorgesehen sein, was in Fig. 6 durch gestrichelte Linien angedeutet ist. Diese Abstreifelemente 33 haben die Aufgabe, das Schmierelement 32 vor Schmutzpartikeln zu schützen, die unerwünschterweise in den Bereich der Schmiervorrichtung 28 eintreten konnten. Ferner haben sie die Aufgabe, von der Gewindespindel 12 überschüssiges Schmiermittel wieder abzunehmen, um deren gleichmäßige Schmierung sicherzustellen. Analoges gilt im übrigen auch für die Axialnut-Schmiervorrichtung gemäß Fig. 8 und 9.

Zum Dochtansatz 40c ist noch nachzutragen, dass dieser auch als ein von dem Ansaugelement 40 gesondert ausgebildetes Teil gefertigt und in die Verbindungsöffnung 30h eingesetzt sein kann. Ferner kann anstelle des Dochtansatzes 40c eine Membraneinheit in dem Durchgang 30h angeordnet werden, welche Schmiermittel nur in einer Richtung, nämlich vom Reservoir 34 zum Schmierelement 32 hin passieren lässt, also als eine Art Rückschlagventil arbeitet. Auch diese Ausführungsvariante kann ebenso bei der Axialnut-Ausführungsform gemäß Fig. 8 und 9 zum Einsatz kommen.

## Patentansprüche

1. Lineareinheit (10) umfassend:
- einen Läufer (18), der auf einer Stange (12) längs deren Stangenachse (S) hin- und herbewegbar angeordnet ist, und
- wenigstens eine die Stange (12) zumindest teilweise umgreifende Schmiervorrichtung (28), welche wenigstens ein mit der Stange (12) in Schmierkontakt stehendes Schmierelement (32) und wenigstens ein mit dem Läufer (18) bewegungsfest verbundenes Schmiermittel-Reservoir (34) umfasst,
wobei in der Außenumfangsfläche (12a) der Stange (12) wenigstens eine Schraubennut (12b) gebildet ist,
wobei der Läufer (18) in seiner Innenumfangsfläche wenigstens eine Schraubennut (18b) aufweist, welche zusammen mit der wenigstens einen Nut (12b) der Stange (12) einen Gewindekanal (20) bildet, in dem eine Mehrzahl von Wälzkörpem angeordnet ist,
wobei das Schmiermittel-Reservoir (34) bezüglich der Stangenachse (S) radial außerhalb des Schmierelements (32) angeordnet ist, wobei die Schmiervorrichtung (28) einen vorzugsweise hülsenförmigen Grundkörper (30) umfasst und die Außenumfangsfläche (30e) des Grundkörpers (30) zumindest teilweise eine innere Begrenzungswand des Schmiermittel-Reservoirs (34) bildet,
**dadurch gekennzeichnet, dass** an der Innenumfangsfläche (30a) des Grundkörpers (30) das wenigstens eine Schmierelement (32) angeordnet ist und dass in der Innenumfangsfläche des Grundkörpers (30) wenigstens eine Schraubennut (30b) ausgebildet ist, in welcher das entsprechend schraubenförmige-Schmierelement (32) aufgenommen ist.

2. Lineareinheit nach Anspruch 1 und,
**dadurch gekennzeichnet, dass** das Schmierelement (32) eine schmieraktive Länge von wenigstens 15 mm, vorzugsweise wenigstens 25 mm, aufweist.

3. Lineareinheit nach Anspruch 1,
**dadurch gekennzeichnet, dass** die äußere Begrenzungswand des Schmiermittel-Reservoirs (34) von der Innenumfangsfläche eines vorzugsweise hülsenförmigen Abdeckkörpers (36) gebildet ist, welcher die Außenumfangsfläche des Grundkörpers (30) zumindest auf einem Teil dessen Länge mit Abstand umgibt.

4. Lineareinheit nach Anspruch 1,
**dadurch gekennzeichnet, dass** die äußere Begrenzungswand des Schmiermittel-Reservoirs (34) von der Innenumfangsfläche einer Ausnehmung (16a) des Läufers (18) oder eines mit diesem verbundenen Bauteils (16) gebildet ist, welche die Außenumfangsfläche des Grundkörpers (30) zumindest auf einem Teil dessen Länge mit Abstand umgibt.

5. Lineareinheit nach einem der Ansprüche 1 bis 4,
**dadurch gekennzeichnet, dass** der Grundkörper (30) und gegebenenfalls der Abdeckkörper (36) als Spritzgussteil, vorzugsweise aus Kunststoff, gefertigt ist.

6. Lineareinheit nach Anspruch 1,
**dadurch gekennzeichnet, dass** sich das Schmierelement (32) im Wesentlichen über die gesamte Länge der Nut (30b) erstreckt.

7. Lineareinheit nach Anspruch 1,
**dadurch gekennzeichnet, dass** in Richtung der Erstreckung der Nut (30b) gesehen vor oder/und hinter dem Schmierelement (32) ein Abstreifelement (33) in der Nut (30b) angeordnet ist.

8. Lineareinheit nach einem der Ansprüche 1 bis 7,
**dadurch gekennzeichnet, dass** in dem Grundkörper (30) wenigstens eine radiale Verbindungsöffnung (30h) vorgesehen ist, durch welche das in dem Schmiermittel-Reservoir (34) aufgenommene Schmiermittel zu dem wenigstens einen Schmierelement (32) gelangt.

9. Lineareinheit nach Anspruch 8,
**dadurch gekennzeichnet, dass** in wenigstens einer radialen Verbindungsöffnung (30h) ein Dochtelement (40c) angeordnet ist, das mit einem zugehörigen Schmierelement (32) in Schmiermittelaustausch-Kontakt steht.

10. Lineareinheit nach einem der Ansprüche 1 bis 9,
**dadurch gekennzeichnet, dass** in der Außenumfangsfläche (30e) des Grundkörpers (30) wenigstens eine vorzugsweise in Umfangsrichtung verlaufende Nut (30g) ausgebildet ist, in welcher ein Schmiermittel-Ansaugelement (40) aufgenommen ist.

11. Lineareinheit nach Anspruch 10,
**dadurch gekennzeichnet, dass** das Dochtelement (40c) als radial innerer Ansatz des Schmiermittel-Ansaugelements (40) ausgebildet ist.

12. Lineareinheit nach einem der Ansprüche 1 bis 11,
**dadurch gekennzeichnet, dass** das wenigstens eine Schmierelement (32) oder/und das wenigstens eine Schmiermittel-Ansaugelement (40) oder/und das Dochtelement (40c) aus einem Polymerschaumstoff gefertigt sind, vorzugsweise aus einem Polymerschaumstoff-Plattenmaterial geschnitten sind.

13. Lineareinheit nach Anspruch 9 oder 10,
**dadurch gekennzeichnet, dass** das wenigstens eine Dochtelement als Membrane ausgebildet ist, vorzugsweise als vom Schmiermittel Reservoir (34) zum Schmierelement (32) hin öffnende Rückschlag-Membrane.

14. Lineareinheit nach einem der Ansprüche 1 bis 13,
**dadurch gekennzeichnet, dass** an wenigstens einem der, vorzugsweise beiden, axialen Längsenden (30i, 30k) der Schmiervorrichtung (28) eine Dichtvorrichtung (42) vorgesehen ist.

15. Lineareinheit nach einem der Ansprüche 1 bis 14,
**dadurch gekennzeichnet, dass** das Schmiermittel-Reservoir (34) einen Anschluss zum Befüllen mit Schmiermittel aufweist.

16. Lineareinheit nach einem der Ansprüche 1 bis 15,
**dadurch gekennzeichnet, dass** das Schmiermittel Schmierfett oder vorzugsweise Schmieröl ist.

17. Lineareinheit nach einem der Ansprüche 1 bis 16,
**dadurch gekennzeichnet, dass** der Läufer (18) oder eine an diesem befestigte Aufbaueinheit (16) zur Anbringung einer durch die Lineareinheit (10) zu verstellenden Funktionseinheit dient.

18. Lineareinheit nach einem der Ansprüche 1 bis 17,
**dadurch gekennzeichnet, dass** die Schmiervorrichtung (28) im Wesentlichen innerhalb der axialen Erstreckung des Läufers (18) oder/und der Aufbaueinheit (16) angeordnet ist.

19. Lineareinheit nach Anspruch 18,
**dadurch gekennzeichnet, dass** die Schmiervorrichtung (28) zu wenigstens 70%, vorzugsweise zu wenigstens 90%, ihrer axialen Erstreckung innerhalb der axialen Erstreckung des Läufers (18) oder/und der Aufbaueinheit (16) angeordnet ist.

20. Lineareinheit nach einem der Ansprüche 1 bis 19,
**dadurch gekennzeichnet, dass** sie ein Wälzkörpergewindetrieb (10), insbesondere ein Kugelgewindetrieb, ist, umfassend:
- eine die Stange bildende Gewindespindel (12) mit einer Spindelachse (S), wobei in der Außenumfangsfläche (12a) der Gewindespindel (12) wenigstens eine Spindelnut (12b) vorgesehen ist, und
- eine zumindest einen Teil des Läufers (14) bildende, die Gewindespindel (12) umgreifende Gewindemuttereinheit (18) mit wenigstens einer Gegenspindelnut (18b), welche zusammen mit der zugehörigen Spindelnut (12b) der Gewindespindel (12) einen Gewindekanal (20) bildet, wobei der Gewindekanal (20) Teil eines in sich geschlossenen Umlaufkanals (24) ist, in welchem eine endlose Reihe von Wälzkörpem aufgenommen ist.

21. Lineareinheit nach Anspruch 20,
**dadurch gekennzeichnet, dass** in den Grundkörper (30) wenigstens ein Ausrichtstift (44) eingesetzt, vorzugsweise eingeschraubt, ist, der in eine Spindelnut (12b) der Gewindespindel (12) eingreift.

## Claims

1. A linear motion unit (10) comprising:
- a runner (18) which is arranged so as to be able to move back and forth on a rod (12) along the rod axis (S), and
- at least one lubricating device (28) which at least partly surrounds the rod (12) and which comprises at least one lubricating element (32) in lubricating contact with the rod (12) and at least lubricant reservoir (34) immovably connected to the runner (18),
wherein at least one helical groove (12b) is formed in the outer circumferential surface (12a) of the rod (12),
wherein in its inner circumferential surface the runner (18) has at least one helical groove (18b) which, together with at least one groove (12b) of the rod (12), forms a thread channel (20) in which a plurality of rolling elements is arranged,
wherein the lubricant reservoir (34) is arranged radially outside the lubricating element (32) with respect to the rod axis (S), wherein the lubricating device (28) comprises a preferably sleeve-shaped base member (30) and the outer circumferential surface (30e) of the base member (30) forms at least partly an inner boundary wall of the lubricant reservoir (34),
**characterised in that** the at least one lubricating element (32) is arranged on the inner circumferential surface (30a) of the base member (30), and **in that** in the inner circumferential surface of the base member (30) there is formed at least one helical groove (30b) which accommodates the corresponding helical lubricating element (32).

2. A linear motion unit according to Claim 1,
**characterised in that** the lubricating element (32) has an active lubricating length of at least 15 mm, preferably at least 25 mm.

3. A linear motion unit according to Claim 1,
**characterised in that** the outer boundary wall of the lubricant reservoir (34) is formed by the inner circumferential surface of a preferably sleeve-shaped cover body (36) which surrounds the outer circumferential surface of the base member (30) at a distance at least over part of its length.

4. A linear motion unit according to Claim 1,
**characterised in that** the outer boundary wall of the lubricant reservoir (34) is formed by the inner circumferential surface of a recess (16a) in the runner (18) or a component (16) which is connected thereto and which surrounds the outer circumferential surface of the base member (30) at a distance at least over part of its length.

5. A linear motion unit according to any one of Claims 1 to 4, **characterised in that** the base member (30) and, optionally, the cover body (36) is produced as an injection-moulded part, preferably from plastics material.

6. A linear motion unit according to Claim 1,
**characterised in that** the lubricating element (32) extends substantially along the entire length of the groove (30b).

7. A linear motion unit according to Claim 1,
**characterised in that**, viewed in the direction of extension of the groove (30b), a wiping element (33) is arranged in the groove (30b) in front of and/or behind the lubricating element (32).

8. A linear motion unit according to any one of Claims 1 to 7, **characterised in that** at least one radial connecting opening (30h) is provided in the base member (30), through which the lubricant contained in the lubricant reservoir (34) reaches the at least one lubricating element (32).

9. A linear motion unit according to Claim 8,
**characterised in that** a wick element (40c), which is in lubricant-exchanging contact with an associated lubricating element (32), is arranged in at least one radial connecting opening (30h).

10. A linear motion unit according to any one of Claims 1 to 9, **characterised in that** at least one groove (30g), which preferably extends in a circumferential direction, is formed in the outer circumferential surface (30e) of the base member (30), which groove accommodates a lubricant intake element (40).

11. A linear motion unit according to Claim 10,
**characterised in that** the wick element (40c) is formed as a radially inner projection of the lubricant intake element (40).

12. A linear motion unit according to any one of Claims 1 to 11, **characterised in that** the at least one lubricating element (32) and/or the at least one lubricant intake element (40) and/or the wick element (40c) are made from a polymer foam material, preferably cut from a polymer foam sheet material.

13. A linear motion unit according to Claim 9 or 10,
**characterised in that** the at least one wick element is in the form of a membrane, preferably in the form of a one-way membrane opening from the lubricant reservoir (34) towards the lubricating element (32).

14. A linear motion unit according to any one of Claims 1 to 13, **characterised in that** a sealing device (42) is provided on at least one, preferably both, of the axial longitudinal ends (30i,30k) of the lubricating device (28).

15. A linear motion unit according to any one of Claims 1 to 14, **characterised in that** the lubricant reservoir (34) has a connection for filling with lubricant.

16. A linear motion unit according to any one of Claims 1 to 15, **characterised in that** the lubricant is lubricating grease or, preferably, lubricating oil.

17. A linear motion unit according to any one of Claims 1 to 16, **characterised in that** the runner (18), or a mounting unit (16) fastened thereto, serves to attach a functional unit which is to be displaced by the linear motion unit (10).

18. A linear motion unit according to any one of Claims 1 to 17, **characterised in that** the lubricating device (28) is arranged substantially within the axial extension of the runner (18) and/or the mounting unit (16).

19. A linear motion unit according to Claim 18,
**characterised in that** at least 70 %, preferably at least 90 %, of the axial extension of the lubricating device (28) is arranged within the axial extension of the runner (18) and/or the mounting unit (16).

20. A linear motion unit according to any one of Claims 1 to 19, **characterised in that** it is a rolling element spindle drive (10), in particular a ball screw drive, comprising:
- a threaded spindle (12) forming the rod and with a spindle axis (S), wherein at least one spindle groove (12b) is provided in the outer circumferential surface (12a) of the threaded spindle (12), and
- a threaded nut unit (18) which forms at least part of the runner (14) and surrounds the threaded spindle (12), with at least one spindle return groove (18b) which, together with the associated spindle groove (12b) of the threaded spindle (12), forms a thread channel (12), wherein the thread channel (2) is part of a closed circulating channel (24) which accommodates an endless series of rolling elements.

21. A linear motion unit according to Claim 20,
**characterised in that** at least one aligning pin (44) is inserted, preferably screwed, into the base member (30), which pin engages in a spindle groove (12b) of the threaded spindle (12).

## Revendications

1. Unité linéaire (10) comportant :
- un curseur (18), qui est monté sur une tige (12) de manière à pouvoir se déplacer en va-et-vient le long de l'axe (S) de celle-ci, et
- au moins un dispositif de lubrification (28), qui enserre au moins partiellement la tige (12) et qui comporte au moins un élément de lubrification (32) en contact pour lubrification avec la tige (12) et au moins un réservoir de lubrifiant (34) relié solidaire en mouvement avec le curseur (18),
au moins une rainure hélicoïdale (12b) étant formée dans la face extérieure périphérique (12a) de la tige (12),
le curseur (18) comportant au moins une rainure hélicoïdale (18b) dans sa face intérieure périphérique, laquelle forme conjointement avec ladite au moins une rainure (12b) de la tige (12) un conduit hélicoïdal (20), dans lequel est disposée une pluralité de corps de roulement,
le réservoir de lubrifiant (34) étant agencé radialement à l'extérieur de l'élément de lubrification (32) par rapport à l'axe (S) de la tige, le dispositif de lubrification (28) comportant un corps de base (30) de préférence en forme de manchon et la face extérieure périphérique (30e) du corps de base (30) formant au moins partiellement une paroi de délimitation intérieure du réservoir de lubrifiant (34),
**caractérisée en ce que** ledit au moins un élément de lubrification (32) est disposé sur la face intérieure périphérique (30a) du corps de base (30) et **en ce que** dans la face intérieure périphérique du corps de base (30) est réalisée au moins une rainure hélicoïdale (30b), dans laquelle est logé l'élément de lubrification (32) de forme hélicoïdale correspondante.

2. Unité linéaire selon la revendication 1, **caractérisée en ce que** l'élément de lubrification (32) a une longueur active de lubrification de 15 mm au moins, de préférence de 25 mm au moins.

3. Unité linéaire selon la revendication 1, **caractérisée en ce que** la paroi de délimitation extérieure du réservoir de lubrifiant (34) est formée par la face intérieure périphérique d'un corps de recouvrement (36) de préférence en forme de manchon, lequel entoure à distance la face extérieure périphérique du corps de base (30) au moins sur une partie de la longueur de celle-ci.

4. Unité linéaire selon la revendication 1, **caractérisée en ce que** la paroi de délimitation extérieure du réservoir de lubrifiant (34) est formée par la face intérieure périphérique d'un évidement (16a) du curseur (18) ou d'un élément (16) relié à celui-ci, lequel entoure à distance la face extérieure périphérique du corps de base (30) au moins sur une partie de la longueur de celle-ci.

5. Unité linéaire selon l'une quelconque des revendications 1 à 4, **caractérisée en ce que** le corps de base (30) et, le cas échéant, le corps de recouvrement (36) sont réalisés sous forme de pièce moulée par injection, de préférence en matière synthétique.

6. Unité linéaire selon la revendication 1, **caractérisée en ce que** l'élément de lubrification (32) s'étend sensiblement sur toute la longueur de la rainure (30b).

7. Unité linéaire selon la revendication 1, **caractérisée en ce qu'**un élément de raclage (33) est disposé dans la rainure (30b) devant et/ou derrière l'élément de lubrification (32), dans la direction d'extension de la rainure (30b).

8. Unité linéaire selon l'une quelconque des revendications 1 à 7, **caractérisée en ce qu'**il est prévu dans le corps de base (30) au moins un orifice de liaison (30h), à travers lequel passe le lubrifiant, contenu dans le réservoir de lubrifiant (34), vers ledit au moins un élément de lubrification (32).

9. Unité linéaire selon la revendication 8, **caractérisée en ce que** dans au moins un orifice de liaison (30h) radial est disposée une mèche (40c), qui est en contact pour l'échange de lubrifiant avec un élément de lubrification (32) correspondant.

10. Unité linéaire selon l'une quelconque des revendications 1 à 9, **caractérisée en ce que** dans la face extérieure périphérique (30e) du corps de base (30) est réalisée au moins une rainure (30g) qui s'étend dans le sens périphérique et qui reçoit un élément d'aspiration de lubrifiant (40).

11. Unité linéaire selon !a revendication 10, **caractérisée en ce que** la mèche (40c) est réalisée sous forme de saillie intérieure radiale de l'élément d'aspiration de lubrifiant (40).

12. Unité linéaire selon l'une quelconque des revendications 1 à 11, **caractérisée en ce que** ledit au moins un élément de lubrification (32) et/ou ledit au moins un élément d'aspiration de lubrifiant (40) et/ou la mèche (40c) sont réalisés en mousse polymère, de préférence coupés dans une plaque de mousse polymère.

13. Unité linéaire selon la revendication 9 ou 10, **caractérisée en ce que** ladite au moins une mèche est réalisée sous forme de membrane, de préférence sous forme de membrane anti-retour s'ouvrant depuis le réservoir de lubrifiant (34) vers l'élément de lubrification (32).

14. Unité linéaire selon l'une quelconque des revendications 1 à 13, **caractérisée en ce qu'**il est prévu un dispositif d'étanchéité (42) sur au moins une, de préférence les deux extrémités longitudinales (30i, 30k) axiales du dispositif de lubrification (28).

15. Unité linéaire selon l'une quelconque des revendications 1 à 14, **caractérisée en ce que** le réservoir de lubrifiant (34) comporte un raccord de remplissage pour le lubrifiant.

16. Unité linéaire selon l'une quelconque des revendications 1 à 15, **caractérisée en ce que** le lubrifiant est une graisse de lubrification ou de préférence une huile de lubrification.

17. Unité linéaire selon l'une quelconque des revendications 1 à 16, **caractérisée en ce que** le curseur (18) ou une unité rapportée (16), fixée contre celui-ci, sont utilisés pour le montage d'une unité fonctionnelle destinée à être déplacée par l'unité linéaire (10).

18. Unité linéaire selon l'une quelconque des revendications 1 à 17, **caractérisée en ce que** le dispositif de lubrification (28) est disposé sensiblement à l'extérieur de la dimension axiale du curseur (18) et/ou de l'unité rapportée (16).

19. Unité linéaire selon la revendication 18, **caractérisée en ce que** le dispositif de lubrification (28) est disposé à au moins 70 %, de préférence à au moins 90 % de sa dimension axiale à l'intérieur de la dimension axiale du curseur (18) et/ou de l'unité rapportée (16).

20. Unité linéaire selon l'une quelconque des revendications 1 à 19, **caractérisée en ce qu'**il s'agit d'un organe de commande fileté avec corps de roulement (10), en particulier un organe de commande fileté à billes, comportant :
- une broche filetée (12) formant la tige avec un axe de broche (S), au moins une rainure (12b) étant formée dans la face extérieure périphérique (1 2a) de la broche filetée (12), et
- une unité à écrou fileté (18) qui forme au moins une partie du curseur (14), enserre la broche filetée (12) et comporte au moins une contre-rainure (18b) qui, conjointement avec la rainure (12b) associée à de la broche filetée (12) forme un conduit hélicoïdal (20), le conduit hélicoïdal (20) faisant partie d'un conduit périphérique (24) fermé en soi, dans lequel est logée une série continue de corps de roulement.

21. Unité linéaire selon la revendication 20, **caractérisée en ce que** dans le corps de base (30) est inséré, de préférence vissé, au moins un téton de centrage (44) s'engageant dans une rainure (12b) de la broche filetée (12).
